# EUROPEAN PATENT APPLICATION

(11) **EP 1 172 743 A1**
(43) Date of publication of application: **16.01.2002**
(21) Application number: 00114118.3
(22) Date of filing: 10.07.2000
(51) Int. Cl.: G06F 17/60

(54) **Used car distribution promoting system**

(71) Applicant: TSUBASA SYSTEM CO. LTD., Tokyo (JP)
(72) Inventor: Sakai, Michimoto, Koutou-ku, Tokyo (JP)
(74) Representative: Modiano, Guido, Dr.-Ing.

(57) **Abstract**

A used car distribution promoting system includes a first terminal device 21 corresponding to a maintenance trader, for transmitting various data concerning a car obtained at least one of chances of repair and maintenance/inspection of the car of a customer through a communication line in order to register the data as sale vehicle data, a second terminal device 31 corresponding to a used car purchase trader, for transmitting various data concerning wishes for purchase of a used car through a communication line in order to register the data as purchase vehicle data, and a third terminal device corresponding to an information center, for registering the sale vehicle data transmitted from the first terminal device and the purchase vehicle data transmitted from the second terminal device, respectively, and vehicle data coincident with a condition in the information center are provided as used car purchase information to the customer. By this, channels for accessing the used car market are increased, and anyone can obtain buying and selling information of used cars anytime and quickly.

## Description

### BACKGROUND OF THE INVENTION

The present invention relates to a used car distribution promoting system using a computer network containing terminal devices of a car maintenance trader (garage) , a used car purchase trader, and the like, and its method.

Conventionally, a used car purchase trader obtains the chance to get information of securing cars mainly when an assessment request is made by a customer. However, since such chance of getting information is insufficient for the used car purchase trader, it is impossible to secure sufficient supply of a popular car though there is a customer's demand.

The presence or absence of repair history of a car, a residual automobile inspection period, and the like have a large influence on the assessment of a used car. From the standpoint of the customer, if an assessment sum can be known before or after the repair or maintenance/inspection of his own car, it provides him with useful information for replacement by purchase or the like, and is convenient.

If it becomes possible to easily get purchase information of a customer' s car or sale information of a wreck which enables recycling of parts, the amount of distribution in the used car market can be increased.

### SUMMARY OF THE INVENTION

Accordingly, an object of the present invention is to provide a used car distribution promoting system which enables anyone to get buying and selling information of used cars (including a wreck) anytime and quickly, and its method.

In order to solve the above object, according to a first aspect of the invention, a used car distribution promoting system comprises a first terminal device corresponding to a first trader, for transmitting various data concerning a car obtained at least one of chances of repair and maintenance/inspection of the car of a customer through a communication line in order to register the data as sale vehicle data;
a second terminal device corresponding to a second trader of used car purchase, for transmitting various data concerning wishes for purchase of a used car through a communication line in order to register the data as purchase vehicle data; and
a third terminal device corresponding to an information center, for registering the sale vehicle data transmitted from the first terminal device and the purchase vehicle data transmitted from the second terminal device, respectively;
wherein vehicle data coincident with a condition in the information center is provided as used car purchase information to the customer.

According to a second aspect of the invention, a used car distribution promoting system comprises a first terminal device corresponding to a first trader, for transmitting various data concerning a car of a customer obtained one of chances of refueling and purchase of articles through a communication line in order to register the data as sale vehicle data;
a second terminal device corresponding to a second trader of used car purchase, for transmitting various data concerning wishes for purchase of a used car through a communication line in order to register the data as purchase vehicle data; and
a third terminal device corresponding to an information center, for registering the sale vehicle data transmitted from the first terminal device and the purchase vehicle data transmitted from the second terminal device, respectively;
wherein vehicle data coincident with a condition in the information center is provided to the customer as used car purchase information.

According to a third aspect of the invention, a used car distribution promoting system comprises a first terminal device corresponding to a first trader, for transmitting various data concerning a wreck through a communication line in order to register the data as sale vehicle data;
a second terminal device corresponding to a second trader of parts recycling, for transmitting various data concerning wishes for purchase of a car for parts recycling through a communication line in order to register the data as purchase vehicle data; and
a third terminal device corresponding to an information center, for registering the sale vehicle data transmitted from the first terminal device and the purchase vehicle data transmitted from the second terminal device, respectively;
wherein vehicle data coincident with a condition in the information center are provided as sale information to the second trader of parts recycling.

Further, a used car distribution promoting method of the invention comprises the steps of registering, as sale vehicle data, various data concerning cars received through a communication line from a first terminal device corresponding to a first trader; registering, as purchase vehicle data, various data concerning purchase wishes received through a communication line from a second terminal device corresponding to a second trader; and providing, as buying and selling information, vehicle data in which conditions are coincident with each other between the sale vehicle data and the purchase vehicle data from a third terminal device corresponding to an information center to a requester.

According to this invention, it is possible to increase channels for accessing the used car market. As a result, anyone can get buying and selling information of used cars anytime and quickly.

### BRIEF DESCRIPTION OF THE DRAWINGS

These objects and advantages of the present invention will become more apparent and more readily appreciated from the following detailed description of the presently preferred exemplary embodiments, taken in conjunction with the accompanying drawings of which:
Fig. 1 is a block diagram showing a structure of a used car distribution promoting system according to an embodiment of the present invention;
Fig. 2 is a block diagram showing a structural example of a terminal device and an information center in Fig. 1;
Fig. 3 is a view showing a customer master file of a car maintenance trader (garage) ;
Fig. 4 is a view showing an input screen of a terminal device of the car maintenance trader (garage) ;
Fig. 5 is a view showing an editing example of the input screen of the terminal device of the car maintenance trader (garage);
Fig. 6 is a view showing repair data which the terminal device of the car maintenance trader (garage) has;
Fig. 7 is a view showing a sale vehicle database of an information center;
Fig. 8 is a view showing a purchase vehicle database of the information center;
Fig. 9 is a view showing an input screen of a terminal device of a used car purchase trader;
Fig. 10 is a view showing used car purchase information prepared by the information center;
Fig. 11 is a flowchart showing a vehicle repair cost estimate processing in a terminal device of a car maintenance trader (garage) ;
Fig. 12 is a flowchart showing the vehicle repair cost estimate processing in the terminal device of the car maintenance trader (garage);
Fig. 13 is a view showing repair data contained in a terminal device of a car maintenance trader (garage) ;
Fig. 14 is a view showing a customer master file of a gas station or a car supplies shop;
Fig. 15 is a view showing an editing example of an input screen of a terminal device of a car maintenance trader (garage) ;
Fig. 16 is a view showing a sale vehicle database (wreck) of the information center;
Fig. 17 is a view showing a purchase vehicle database (wreck) of the information center;

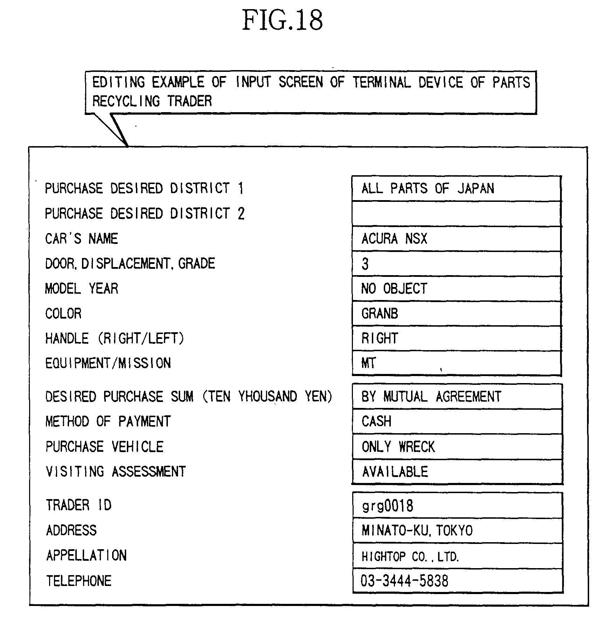

Fig. 18 is a view showing an editing example of an input screen of a terminal device of a parts recycling trader;
Fig. 19 is a view showing a vehicle data file which the parts recycling trader has; and
Fig. 20 is a view showing wreck sale information prepared by the information center.

### DETAILED DESCRIPTION OF THE PREFERRED EMBODIMENTS

Next, embodiments of the present invention will be described with reference to the drawings.

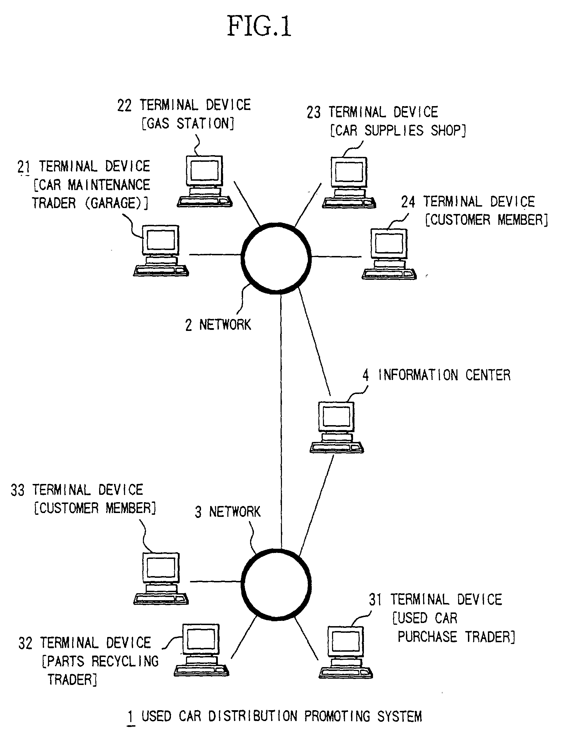

In Fig. 1, a used car distribution promoting system 1 according to an embodiment of the present invention is constituted by a first computer network 2, a second computer network 3, and an information center 4.

The first computer network 2 contains a plurality of terminal devices (PC) 21, 22, 23 and 24. The PC 21 is a terminal device corresponding to a car maintenance trader (garage) , the PC 22 is a terminal device corresponding to a refueling trader (gas station), the PC 23 is a terminal device corresponding to a car supplies shop, and the PC 24 is a terminal device corresponding to a customer member. The PCs are constructed by personal computers or the like.

The second computer network 3 contains a plurality of terminal devices (PC) 31, 32, and 33. The PC 31 is a terminal device corresponding to a used car purchase trader, the PC 32 is a terminal device corresponding to a parts recycling trader, and the PC 33 is a terminal device corresponding to a customer member. The PCs are constructed by personal computers or the like. The first computer network 2 and the second computer network 3 are connected to each other through a router, gateway or the like, although not shown.

The information center 4 is constituted by a personal computer or the like, and constructs databases on the basis of vehicle data received from the respective terminal devices contained in the networks 2 and 3 through a communication line. The used car databases include sale vehicle databases 41 and 43, and purchase vehicle databases 42 and 44.

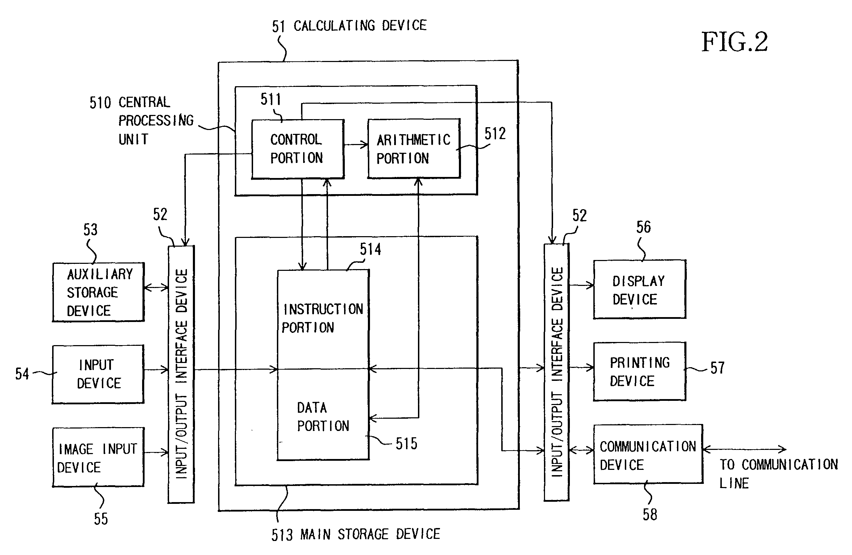

Each of the terminal devices (PC) 21 to 24, 31 to 33, and the information center 4 constituted by personal computers or the like is provided with, as shown in Fig. 2, a calculating device 51, an auxiliary storage device 53, such as a floppy disk device or hard disk device, connected to the calculating device 51 through an input/output interface device 52, an input device 54 constituted by a keyboard, a mouse and the like, an image input device 55 such as a digital still camera, a display device 56 and a printing device 57 respectively connected to the calculating device 51 through the input/output interface device 52, and a communication device 58 connected to a communication line (computer network).

The calculating device 51 is constituted by a central processing unit (CPU) 510 and a main storage device (memory such as hard disk, ROM, and RAM) 513. The CPU 510 includes a control portion 511 and an arithmetic portion 512. The memory 513 includes an instruction portion 514 and a data portion 515. This calculating device 51 starts a program stored in the memory 513 or the auxiliary storage device 53 under the control of an operating system (OS), and executes a predetermined task (process). At this time, the calculating device 51 can also execute a multitask execution process in which a plurality of tasks are virtually and simultaneously executed in parallel.

The control portion 511 of the CPU 510 constituting the calculating device 51 fetches an instruction from the memory 515 on the basis of the address of the instruction portion 514 to be executed, decodes the contents of the instruction, and outputs a necessary operation instruction to another device. The arithmetic portion 512 executes four operations, logical operations and the like to the given data. This control portion 511 issues an input/output control instruction to another device through the input/output interface device 52, and outputs a memory control instruction to the memory 513.

A command inputted from the input device 54, the communication device 58, or the like is first transferred to the memory 513. In the memory 513, data and an instruction are selected from the given command, and the selected data and instruction are transferred to the control portion 511 of the CPU 510. Image data captured by the image input device 55 and transferred to the memory 513 through the input/output interface device 52, or various vehicle data inputted from the input device 54 such as the keyboard and from the communication device 58 are stored in the data portion 515 of the memory 513.

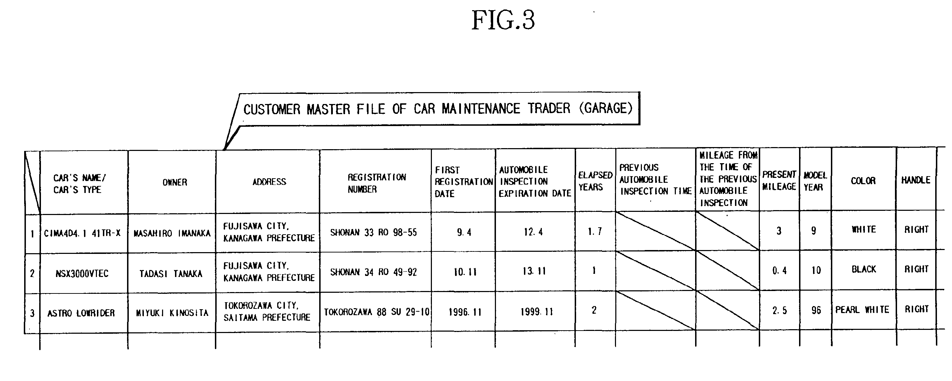

In the used car distribution promoting system constituted in this way, the terminal device (PC) 21 of the car maintenance trader contained in the first computer network 2 is provided with a vehicle repair cost estimate function (vehicle repair cost estimate system) . This estimate system includes a customer master file in data storage form as shown in Fig. 3. The customer master file is stored in the auxiliary storage device 53. In the customer master file, data of car's name/car's type, owner, address, registration number (hereinafter also referred to as car number), first registration date, automobile inspection expiration date, elapsed years, previous automobile inspection time, mileage from the previous automobile inspection time, present mileage, model year, color (color of body) , and handle (position of handle), and the like are stored.

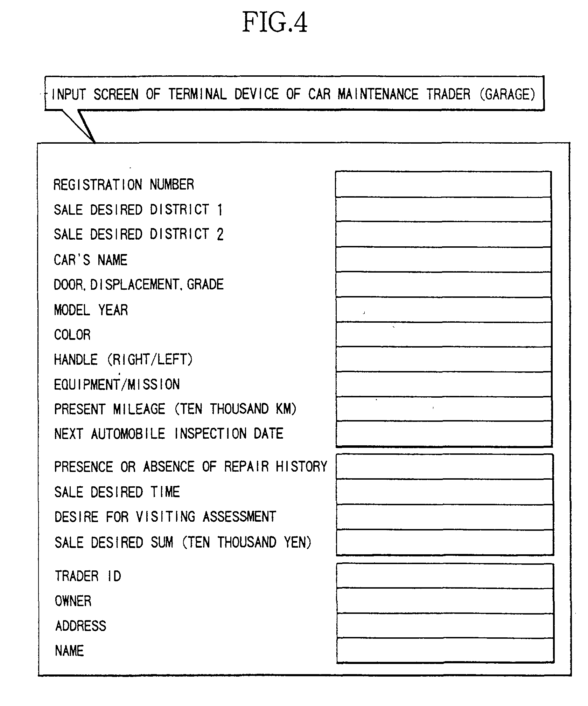

The initial state of dialog of an input screen visually displayed on the display device 56 of the PC 21 of the car maintenance trader includes, as shown in Fig. 4, registration number, sale desired district 1, sale desired district 2, car's name, door/displacement/grade, model year, color (color of body), handle (handle position), equipment/mission, present mileage, next automobile inspection date, presence or absence of repair history, sale desired time, desire for visiting assessment, sale desired sum, trader ID, owner, address, and name.

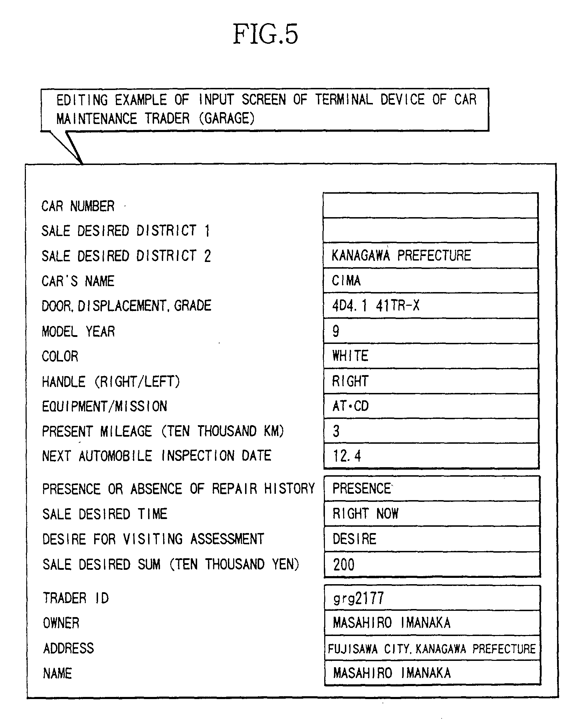

In the PC 21 displaying the dialog of this input screen, when a car number, for example, ┌Shonan 33 Ro 98-55┘ is inputted from the input device 54 such as the keyboard and the mouse, the data of the corresponding car are read out from the customer master file (see Fig. 3), and are temporarily stored in the data portion 515 of the memory 513. The control portion 511 of the CPU 510 reads out the data from the data portion 515, and causes the display device 56 through the input/output interface device 52 to display them in the form shown in Fig. 5.

However, with respect to data which can not be directly obtained from the data of the customer master file, the control portion 511 makes such processing as to instruct the arithmetic portion 512 to make necessary operations, to temporarily store the obtained data in the data portion 515, and to make the data displayed. That is, in the display data of an input screen shown in Fig. 5, ┌Kanagawa prefecture┘ of the sale desired district 2 and ┌12. 4┘ of the next automobile inspection date are automatically generated on the basis of the address of the owner and the automobile inspection expiration data, respectively. Here, although the name basically coincides with the owner, at the time when the owner is different from the user, or the like, the name becomes different. In Fig. 3, data of name and equipment/mission are not shown. The trader ID ┌grg2177┘ is displayed by automatically generating a code assigned to the trader in advance.

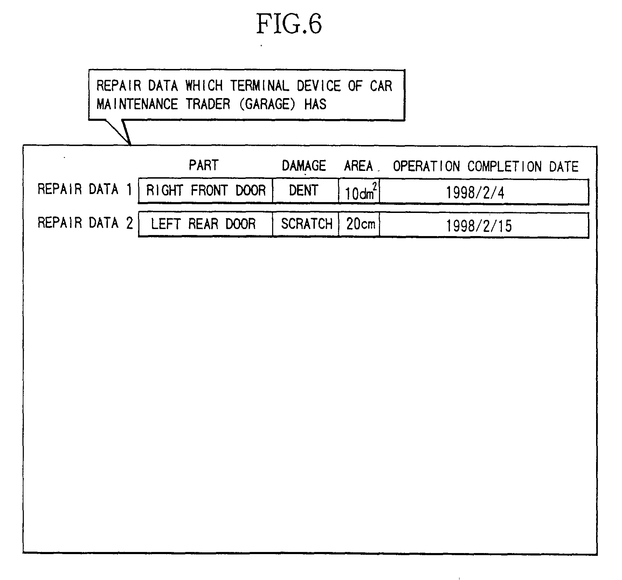

Further, with respect to the presence or absence of the repair history, when ┌presence┘ is inputted by the operation of the input device 54, it is displayed by similar processing of the control portion 511. When ┌presence┘ is inputted with respect to the presence or absence of the repair history, repair data obtained by the vehicle repair cost estimate system are automatically set. That is, the repair data, together with the vehicle data on the input screen shown in Fig. 5, are temporarily stored in the data portion 515 of the memory 513. The form of the repair data is as shown in Fig. 6, and includes , for example, like repair data 2, data of position ┌left rear door┘ , damage ┌scratch┘, area ┌20 cm┘ , and completion date of working ┌1998/2/15┘ .

In the case where assessment is desired in the state of an actual car without repair, a repair history is not inputted. In this case, later, the purchase trader assesses the actual car and makes it reflected in the assessment sum.

With respect to ┌right now┘ in the sale desired time, ┌desire┘ in the desire for visiting assessment, and ┌two million yen (or more) ┘ in the sale desired sum, when an operator operates the input device 54 to input them, they are displayed on the input screen by similar processing of the control portion 511.

In the PC 21 of the car maintenance trader, the input screen shown in Fig. 5 is prepared by the foregoing processing, and transmission is instructed through an internet connection screen by the operation of the input device 54. In the calculating device 51 which received the transmission instruction through the input/output interface device 52, the control portion 511 of the CPU 510 reads out vehicle data (including repair data shown in Fig. 6) corresponding to the input screen from the data portion 515 of the memory 513, and transmits the data, as sale vehicle data, to the information center 4 contained in the network 2 through the communication device 58.

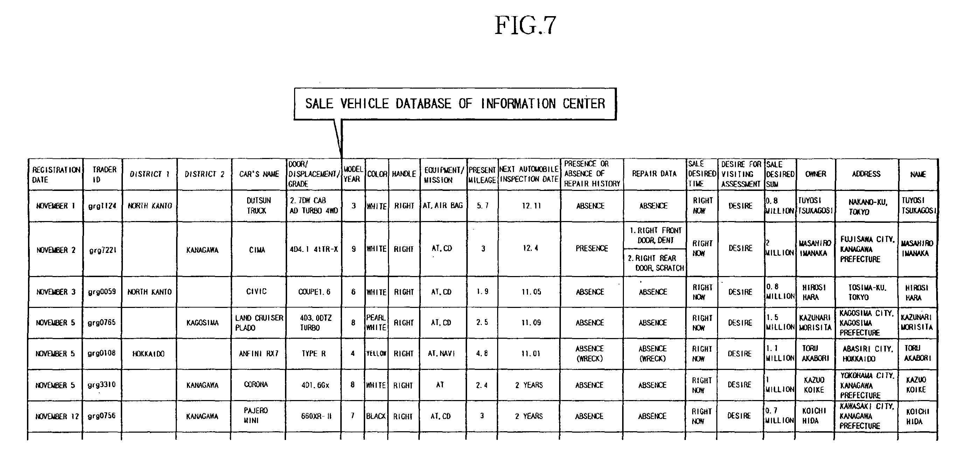

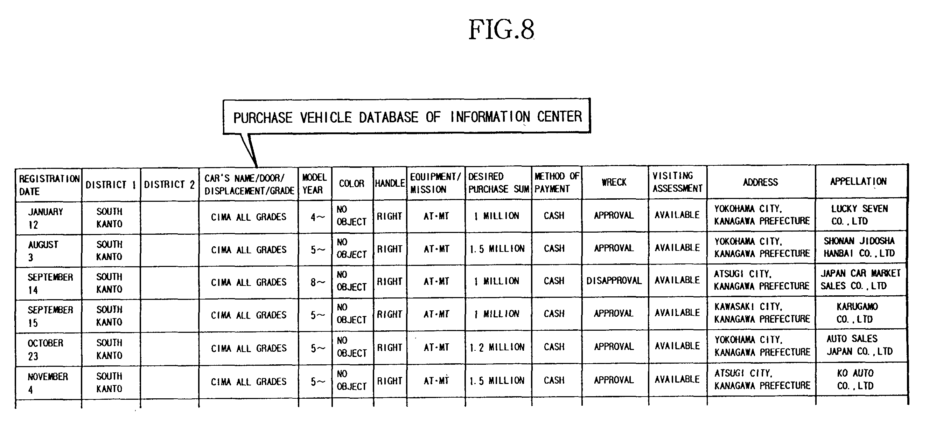

The information center 4 adopts the same structure as the terminal device shown in Fig. 2, and includes the sale vehicle database 41 (see Fig. 7) and the purchase vehicle database 42 (see Fig. 8) as used car databases. The information center 4 receives the vehicle data transmitted from the PC 21 of the car maintenance trader through the communication line of the network 2, and stores the received vehicle data in the sale vehicle database 41.

In the sale vehicle database 41, vehicle data of record date, trader ID, district 1, district 2, car's name, door/displacement/grade, model year, color, handle, equipment/mission, presentmileage, next automobile inspection date, presence or absence of repair history, repair data, sale desired time, desire for visiting assessment, sale desired sum, owner, address, and name are stored in order of record date. Here, ┌November 2┘ of the record date and the like are automatically set by the calculating device 51 of the information center 4 when the vehicle data received from the PC 21 are stored in the sale vehicle database 41. Although the car number contained in the received vehicle data is not displayed, it is stored in the sale vehicle database 41.

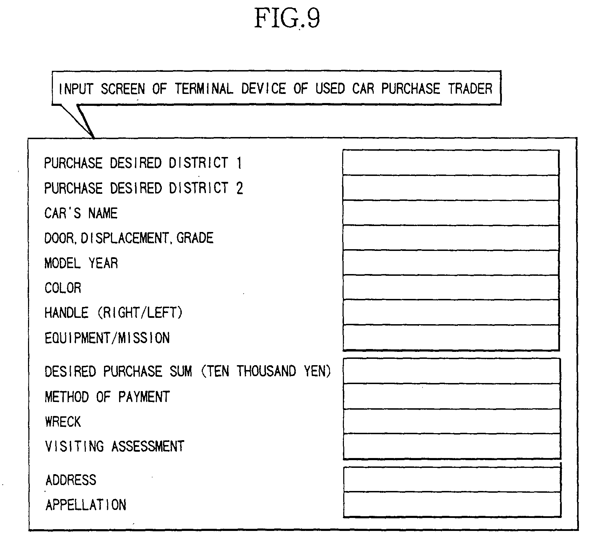

In the purchase vehicle database 42 of the information center 4, vehicle data of record date, district 1, district 2, car's name/door/displacement/grade, model year, color, handle, equipment/mission, desired purchase sum, method of payment, wreck, visiting assessment, address, and appellation (name of purchase trader) are stored in order of record date. Registration of the vehicle data into the purchase vehicle database 42 is performed from the PC 31 of the used car purchase trader contained in the network 3. In the PC 31, the used car purchase trader edits the respective items of the purchase vehicle data shown in Fig. 9 (purchase desired district 1, purchase desired district 2, car's name, door/displacement/grade, model year, color, handle, equipment/mission, desired purchase sum, method of payment, wreck, visiting assessment, address, and appellation) on the input screen of the display device 56, transmits the data to the information center 4 through the communication line of the network 3, and registers the data.

When the customer member using the PC 24 contained in the network 2 or the PC 33 contained in the network 3 wants to obtain the used car purchase information from the used car purchase trader, he operates the input device 54 to input identification information (ID or password) and accesses the information center 4. In the case where the information center 4 receives the request for used car purchase information from, for example, the customer member (Name: Masahiro Imanaka) of the PC 24, after the information center 4 checks the identification information, since the sale vehicle data corresponding to the customer member have been received from the PC 21 of the car maintenance trader and have been already stored in the sale vehicle database 41, the information center searches the used car purchase information coincident with the condition from the purchase vehicle database 42.

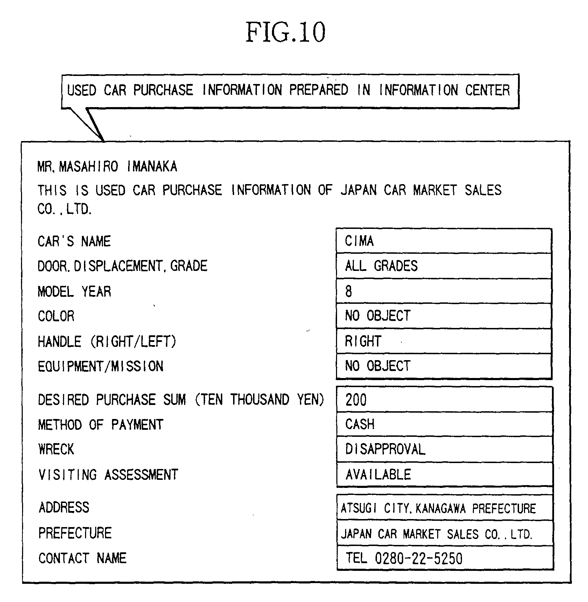

In the information center 4, as a result of the search, data of a used car purchase trader ┌Japan Car Market Sales Co., Ltd.┘ registered on ┌September 14┘ can be obtained as the purchase information coincident with the condition from the purchase vehicle database 42. In the information center 4, the used car purchase information in the form shown in Fig. 10 is edited on the screen of the display device 56, and is transmitted to the PC 24 used by the customer member through the communication line of the network 2 from the internet connection screen. The customer member can receive the used car purchase information transmitted from the information center 4 in the form of electronic mail.

Incidentally, such modification may be made that the used car purchase information from the information center 4 is received by the PC 21 of the car maintenance trader and is printed on a notification of repair or automobile inspection result, and it is sent to the customer member by direct mail.

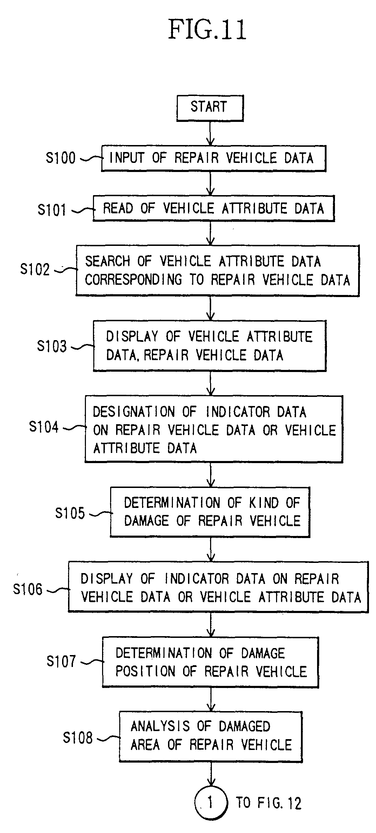

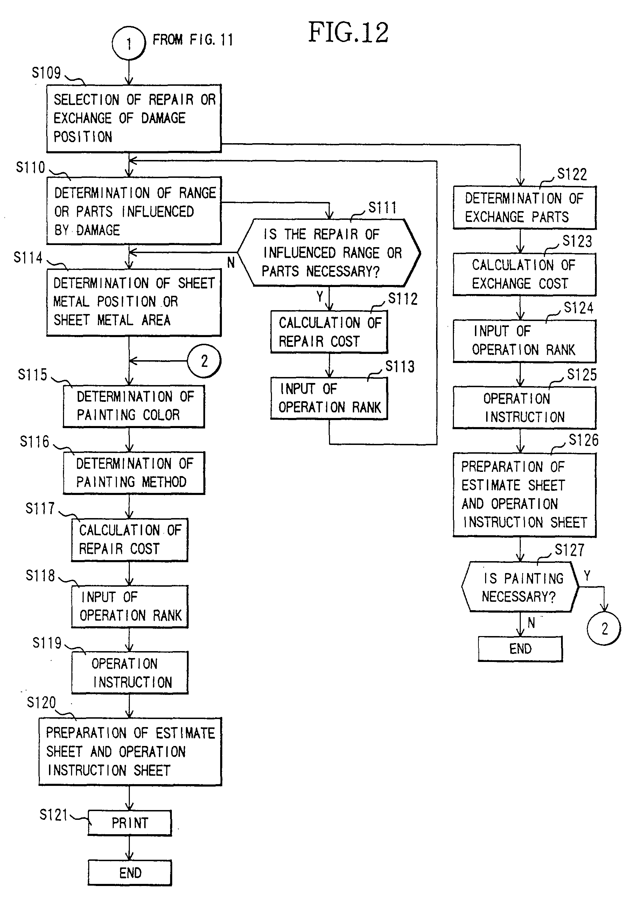

Here, the vehicle repair cost estimate function (vehicle repair cost estimate system) provided in the terminal device (PC) 21 of the car maintenance trader will be described with reference to Figs. 2, 11 and 12.

This vehicle repair cost estimate system is constituted by an input device 54 for inputting repair vehicle data of a car to be repaired, which was damaged by an accident or the like, a main storage device (memory) 513 for storing car attribute data, a display device 56 for visually displaying the respective data, and a calculating device 51 for searching the car attribute data corresponding to the inputted repair vehicle data from the memory 513 to visually display them on the display device 56.

The memory 513 stores division data, as vehicle attribute data, for dividing a region set for each region of a vehicle into respective areas on the basis of a predetermined condition and for setting repair conditions corresponding to the respective areas. The calculating device 51 includes designation means for designating a damage position of a vehicle, judgement means for judging which area set in each region the designated damage position corresponds to, and estimate means for calculating repair cost on the basis of repair condition data of the area judged by the judgement means.

By this structure, on the basis of the repair vehicle data of a repair vehicle inputted from the input device 54, the vehicle attribute data corresponding to the repair vehicle data and stored in the memory 513 in advance are searched, and at least one of the repair vehicle data and the vehicle attribute data is displayed on the display device 56. Indicator data made to correspond to the kind of damage of the repair vehicle and stored in the memory 513 are designated on the repair vehicle data displayed on the display device 56 or on the car attribute data, so that the kind of damage of the repair vehicle is determined.

When the kind of damage is determined, the indicator data are displayed on the repair vehicle data displayed on the display device 56 or the car attribute data, and the position of the damage is determined by designation means. Here, by freely changing the size of the indicator data, the area of the damage, together with the position of the damage, can be determined. The calculating device 51 judges to which area in areas divided by the division data the determined damage portion belongs, by using the judgement means, and a repair cost estimate of the damaged portion is made by the estimate means in view of the repair condition of the area.

At this estimate, a painting range is determined in performing a painting operation, a painting color of the damaged position is determined, a painting method is determined, and a detailed repair cost estimate of adding up wages of the operation, parts/materials cost, and the like is made.

When the position and the area of the damage are determined, next, according to the degree of the damage, a region (range and parts) influenced by shock due to the damage, a sheet metal work area of the damaged portion, and a sheet metal work position in the damaged portion, and further, a painting range, a painting color, and a painting method are determined, and the estimate of repair cost can also be made.

This calculating device 51 can use at least one of vehicle various data corresponding to respective types of cars, parts data, painting color data, painting method data, wages data required for sheet metal repair, and wages data required for exchange of parts or repair, as the vehicle attribute data.

Further, this calculating device 51 uses the indicator data on the basis of the vehicle attribute data to estimate the repair cost, and displays respective operations required for the repair or exchange according to rank, and the repair costs corresponding to the respective operations of repair, exchange and the like may be independently displayed. Besides, repair operations according to rank, exchange operations according to rank, repair costs according to rank, and the like may be displayed at the same time.

A processing procedure of the calculating device 51 will be described in detail. First, repair vehicle data of a car number or the like for identifying the type of the repair vehicle are inputted by the input device 54, and are transferred to the memory 513 through the input/output interface device 52 (step 100).

The control portion 511 of the CPU 510 gives an instruction to read the repair vehicle data and the vehicle attribute data stored in the memory 513 to the arithmetic portion 512 (step 101), and the arithmetic portion 512 searches the vehicle attribute data corresponding to this repair vehicle data from the repair vehicle data on the basis of this instruction, and reads them into its own register (step 102).

Both or either one of the searched vehicle attribute data and the repair vehicle data is displayed on the display device 56 (step 103). The indicator data corresponding to the kind of damage are simultaneously displayed on the screen of the display device 56.

Next, when the indicator data is selected according to the kind of damage (step 104), the control portion 511 gives an instruction to determine which damage is indicated by the selected indicator data to the arithmetic portion 512, and the arithmetic portion 512 determines the kind (shape) of the damage of the repair car on the basis of this instruction (step 105).

Next, the indicator data is dragged on the display screen by using the mouse, is dropped on the damaged portion and is displayed, and the size of the indicator data is changed in proportion to the size of the damage (step 106).

By this, the control portion 511 determines the dropped position as the damage position, gives an instruction to calculate the area of the damaged portion according to the size of the dropped mark to the arithmetic portion 512, the arithmetic portion 512 determines the position of the damage on the basis of this instruction (step 107) , and determines the area of the damage (step 108). The determined kind of the damage, the position of the damage, and the area of the damage are fed back from the arithmetic portion 512 to the memory 513 and are stored.

At the same time, the arithmetic portion 512 calculates the cost for repair or exchange of the damaged position, and the control portion 511 controls the arithmetic portion 512 so that the cost for repair or exchange of the damaged position is displayed on the display device 56.

Next, the arithmetic portion 512 makes the operator select repair or exchange of the damage position (step 109). Further, when the repair is selected, the arithmetic portion 512 next determines the scope and parts influenced by shock due to the damage (step 110). The determination of the influenced scope and parts is carried out on the basis of repair operation data previously stored in the memory 513 and the corresponding parts data.

Incidentally, a comparing operation is carried out among data of a past repair vehicle, damage data of the past repair vehicle grasped from the data, parts data used for the past repair vehicle, and vehicle attribute data made of vehicle image data for searching damaged regions of the repair vehicle on the basis of damaged region data of the past repair vehicle, so that the foregoing determination can also be made.

When the influenced range and parts exist and these are determined, the control portion 511 gives an instruction to judge whether or not repair of the range and the parts is necessary to the arithmetic portion 512, and the arithmetic portion 512 judges the presence or absence of the repair after input from the operator is made (step 111).

Here, when the operator recognizes the repair of the range and the parts to be necessary and inputs this instruction from the input device 54, the control portion 511 causes the arithmetic portion 512 to calculate the cost required for the repair on the basis of the initialized first course (step 112), and further, when another operation rank is inputted from the operator (step 113), the arithmetic portion 512 feeds back and stores the cost and the operation rank in the memory 513. Although the operation rank is set on the basis of the vehicle attribute data stored in the memory 513 in advance, this operation rank can be changed each time by inputting from the input device 54.

Next, when the range to be repaired and all parts are determined or the range to be influenced and parts do not exist, the control portion 511 causes the arithmetic portion 512 to determine the sheet metal position and sheet metal area (step 114). Here, when there is no need of sheet metal work, the sheet metal position and the sheet metal area are not determined.

When the sheet metal work is necessary and the sheet metal position and the sheet metal area are determined, the arithmetic portion 512 determines a painting color (step 115), and determines a painting method (step 116) . The determination of these is performed on the basis of the vehicle attribute data stored in the memory 513 in advance. When these are determined, the arithmetic portion 512 feeds back and stores the specific result in the memory 513.

Next, the control portion 511 causes the arithmetic portion 512 to calculate the cost required for the repair on the basis of the initialized first course (step 117), and when another operation rank is inputted from the operator (step 118), the arithmetic portion 512 feeds back and stores the cost and the operation rank in the memory 513.

Then, an operation instruction indicating the position to be repaired and the like is displayed (step 119), and an estimate sheet and an operation instruction sheet are prepared (step 120). Further, these documents are printed from the printing device 57 and are outputted (step 121).

Besides, at step 109, in the case where the exchange of the repair position is selected, the control portion 511 gives an instruction to make the arithmetic portion 512 determine exchange parts, and the arithmetic portion 512 determines the change parts on the basis of this instruction (step 122). The determination of the change parts is also performed on the basis of the vehicle attribute data stored in the memory 513 in advance .

Next, when the determination of the exchange parts is ended, the arithmetic portion 512 calculates the cost required for the exchange (step 123), and when the operation rank is inputted from the operator (step 124) , the arithmetic portion 512 feeds back and stores the cost and the operation rank in the memory 513.

Then the operation instruction indicating the position to be repaired and the like is displayed (step 125), and the estimate sheet and the operation instruction sheet are prepared (step 126).

Next, judgement whether or not painting of the exchange parts is necessary is requested from the operator (step 137). Here, when it is judged that painting is not necessary, the operation is ended at the point. However, in the case where it is judged that painting is necessary, processes from step 115 to step 121 is carried out.

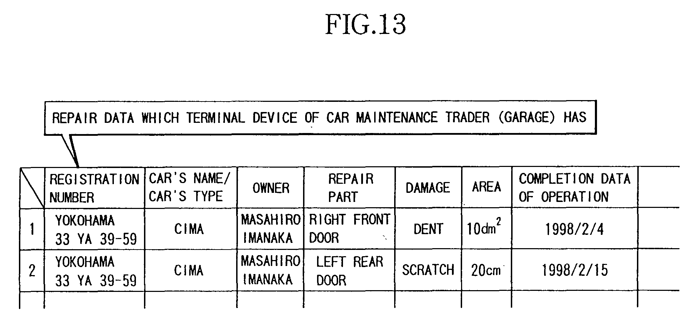

The data concerning the repair car obtained in the vehicle repair cost estimate system are stored in the customer master file (see Fig. 3), and are used for the promotion of used car distribution as described above. The respective data from the step 100 to the step 127 in this estimate system are temporarily stored in the data portion 515 of the memory 513 for each estimate . When a car number is inputted to the input screen, the history of the vehicle is read out and is set as repair data (see Fig. 13).

Next, a description will be made on a case where vehicle data from the terminal device (PC) 22 used in the gas station contained in the network 2 are registered in the information center 4, purchase vehicle data from the terminal device (PC) 31 used by the used car purchase trader contained in the network 3 are registered in the information center 4, and purchase vehicle information is provided in response to the request from the terminal device (PC) 24 or 33 used by the customer member. Incidentally, the case where vehicle data from the terminal device (PC) 23 used by the car supplies shop are registered in the information center 4 and the request of the customer member is satisfied, can also be carried out in the same way.

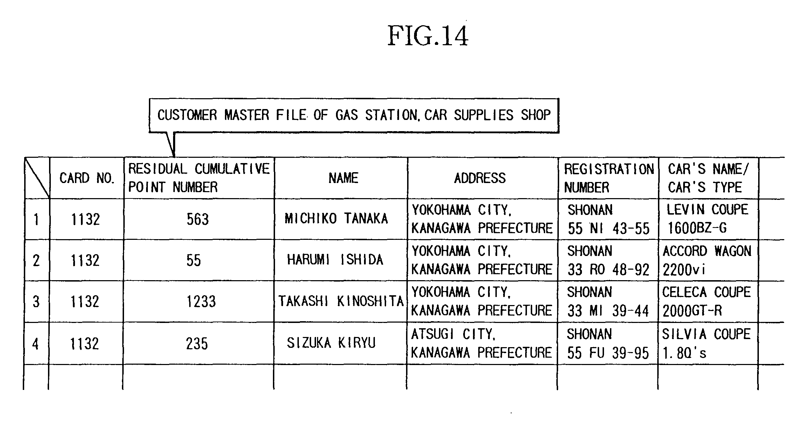

In the used car distribution promoting system 1, the PC 21 of the gas station includes a customer master file in data storage form as shown in Fig. 14. The customer master file is stored in the auxiliary storage device 53. In the customer master file, data of card No. (card number) , residual cumulative point number, name, address, registration number, car's name /car's type, owner, first record date, expiration date of automobile inspection, elapsed years , mileage from the previous automobile inspection, present mileage, model year, color (color of body) , and handle (position of handle) , and the like are stored. Data not shown are the same as the foregoing customer master file of Fig. 3. In the gas station, it is possible to obtain the vehicle data from a customer by using a questionnaire survey at the time of refueling, and the like.

The initial state of dialog of the input screen visually displayed on the display device 56 of the PC 22 includes, as shown in Fig. 4, registration number, sale desired district 1, sale desired district 2, car's name, door/displacement/grade, model year, color (color of body) , handle (position of handle) , equipment/mission, presentmileage, next automobile inspection date, presence or absence of repair history, sale desired time, desire for visiting assessment, sale desired sum, trader ID, owner, address, and name.

In the PC 22 displaying the dialog of this input screen, when a car number, for example, ┌Shonan 33 Ro 98-55┘ is inputted from the input device 54 such as the keyboard and the mouse, data of the corresponding vehicle are read out from the customer master file (see Fig. 14), and are temporarily stored in the data portion 515 of the memory 513. The control portion 511 of the CPU 510 reads out the data from the data portion 515, and causes the data to be displayed on the display device 56 through the input/output interface device 52 in the form shown in Fig. 5.

However, with respect to data which can not be directly obtained from the data of the customer master file, the control portion 511 performs such processing as to instruct the arithmetic portion 512 to make necessary operation, to temporarily store the obtained data in the data portion 515, and to make the data displayed. That is, in the display data of the input screen shown in Fig. 5, ┌Kanagawa prefecture┘ of the sale desired district 2 and ┌12. 4┘ of the next automobile inspection date are automatically generated on the basis of the address of the owner and the expiration date of the automobile inspection, respectively. Here, although the name is basically coincident with the owner, if the owner is different from the user, it becomes a different name. Besides, ┌gas0177┘ of the trader number is displayed by automatically generating a code assigned to the trader in advance.

Further, with respect to the presence or absence of the repair history, when ┌presence┘ or ┌absence┘ is inputted by the operation of the input device 54, it is displayed by similar processing of the control portion 511. Recently, even in the gas station, there are many cases where car maintenance men are disposed and the same service as the foregoing car maintenance trader is provided. Thus, when ┌presence┘ is inputted with respect to the presence or absence of the repair history, the repair data (see Fig. 6) obtained by the vehicle repair cost estimate system which the gas station has are automatically set. When the gas station does not conduct car maintenance business, since concrete repair data can not be obtained, even when ┌presence┘ is inputted with respect to the presence or absence of the repair history, repair data are not set in the vehicle data.

In the case where assessment is desired in the state of an actual car without repair, the repair history is not inputted. In this case, later, the purchase trader assesses the actual car and makes it reflected in the assessment sum.

With respect to ┌right now┘ in the sale desired time, ┌desire┘ in the desire for visiting assessment, and ┌two million yen (or more) ┘ in the sale desire sum, when the operator operates the input device 54 to input them, they are displayed on the input screen by similar processing of the control portion 511.

In the PC 22 of the gas station, by the foregoing processing, the input screen shown in Fig. 5 is prepared, and transmission is instructed through the internet connection screen by the operation of the input device 54. In the calculating device 51 which received the transmission instruction through the input/output interface device 52, the control portion 511 of the CPU 510 reads out the vehicle data corresponding to the input screen from the data portion 515 of the memory 513, and transmits the data, as the sale vehicle data, to the information center 4 contained in the network 2 through the communication device 58.

The information center 4 receives the vehicle data transmitted from the PC 22 of the gas station through the communication line of the network 2, and stores the received vehicle data in the sale vehicle database 41 (see Fig. 7).

When the customer member using the PC 24 contained in the network 2 or the PC 33 contained in the network 3 wants to obtain used car purchase information from the used car purchase trader, he operates the input device 53 to input identification information (ID or password) and accesses the information center 4. In the case where the information center 4 receives a request to obtain the used car purchase information from, for example, the customer member of the PC 24, after the information center 4 checks the identification information, it is judged whether or not sale vehicle data corresponding to the customer member have been received from the PC 22 of the gas station and have been already stored in the sale vehicle database 41, and when they exist, the information center searches the used car purchase information coincident with the condition from the purchase vehicle database 42 (see Fig. 8).

In the information center 4, as a result of the search, the data of the used car purchase trader ┌Japan Car Market Sales Co ., Ltd.┘ registered on ┌September 14┘ can be obtained as purchase information coincident with the condition from the purchase vehicle database 42. In the information center 4, the used car purchase information in the form shown in Fig. 10 is edited on the screen of the display device 56, and is transmitted to the PC 24 used by the customer member through the communication line of the network 2 from the internet connection screen. The customer member can receive the used car purchase information transmitted from the information center 4 in the form of electronic mail.

Next, a description will be made on a case where wreck vehicle data (sale vehicle data) from the terminal device (PC) 21 used by the car maintenance trader (garage) contained in the network 2 are registered in the information center 4, purchase vehicle data from the terminal device (PC) 32 used by the parts recycling trader contained in the network 3 are registered in the information center 4, and vehicle data coincident with a condition is provided as wreck sale information from the information center 4 to the PC 32.

In the used car distribution promoting system 1, as described above, the PC 21 of the car maintenance trader includes a customer master file in the data storage form as shown in Fig. 3. The initial state of dialog of the input screen visually displayed on the display device 56 of the PC 21 includes, as shown in Fig. 4, registration number, sale desired district 1, sale desired district 2, car's name, door/displacement/grade, model year, color (color of body) , handle (position of handle) , equipment/mission, presentmileage, next automobile inspection date, presence or absence of repair history, sale desired time, desire for visiting assessment, sale desired sum, trader ID, owner, address, and name (in this example, it is displayed as an appellation).

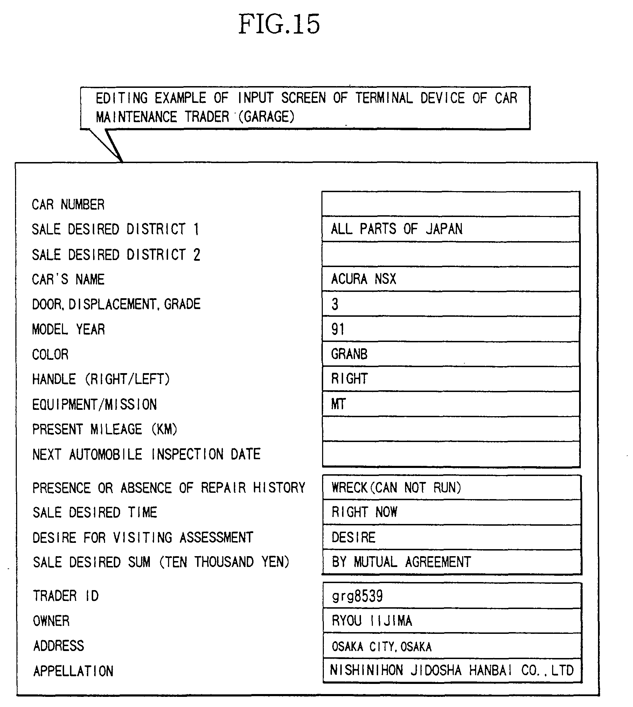

In the PC 21 displaying the dialog of this input screen, when a car number is inputted from the input device 54 such as the keyboard and the mouse, data of the corresponding vehicle are read out from the customer master file (see Fig. 3) and are temporarily stored in the data-portion 515 of the memory 513. The control portion 511 of the CPU 510 reads out the data from the data portion 515, and causes the display device 56 to display them in the form shown in Fig. 15 through the input/output interface device 52. With respect to data which can not be directly obtained from the data of the customer master file, the control portion 511 performs such processing as to instruct the arithmetic portion 512 to make necessary operations, to temporarily store the obtained data in the data portion 515, and to make them displayed.

In the display data of the input screen shown in Fig. 15, ┌grg8539┘ of the trader ID is displayed by automatically generating a code assigned to the trader in advance . When ┌wreck (can not run) ┘ is inputted by the operation of the input device 54 with respect to the presence or absence of the repair history, it is displayed by similar processing of the control portion 511, and vehicle data are transmitted to the information center 4 for registration into a wreck database . With respect to ┌right now┘ in the sale desired time, ┌desire┘ in the desire for visiting assessment, and ┌by mutual agreement┘ in the sale desired sum, when the operator operates the input device 54 to input them, they are displayed by similar processing of the control portion 511.

In the PC of the car maintenance trader, by the foregoing processing, the input screen shown in Fig. 15 is prepared and transmission is instructed by the operation of the input device 54 from the internet connection screen . In the calculating device 51 which received this transmission instruction through the input/output interface device 52, the control portion 511 of the CPU 510 reads out wreck vehicle data corresponding to the input screen from the data portion 515 of the memory 513, and transmits it as sale vehicle data to the information center 4 contained in the network 2 through the communication device 58.

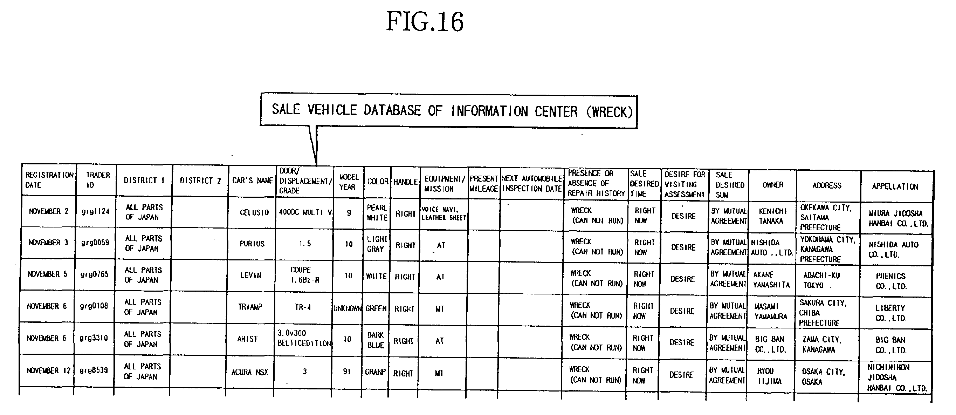

The information center 4 receives the vehicle data transmitted from the PC 21 of the car maintenance trader through the communication line of the network 2, and stores the received vehicle data in the wreck sale vehicle database 43 (see Fig. 16). In the sale vehicle database 43, vehicle data of registration date, trader ID, district 1, district 2, car's name, door/displacement/grade, model year, color, handle, equipment/mission, presentmileage, next automobile inspection date, presence or absence of repair history, sale desired time, desire for visiting assessment, sale desired sum, owner, address , and appellation are stored in order of registration date. Here, ┌November 12┘ of the registration date and the like are automatically set by the calculating device 51 of the information center 4 when the vehicle data received from the PC 21 are stored in the sale vehicle database 43.

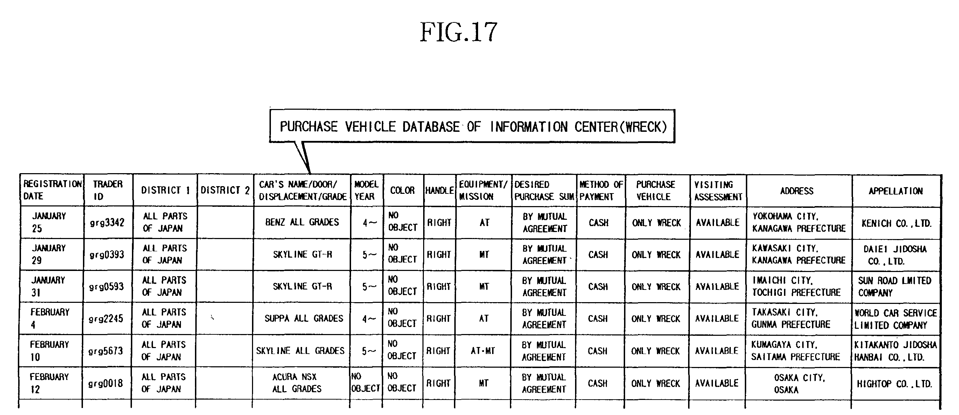

In the purchase vehicle database 44 (see Fig. 17) of the information center 4, vehicle data of registration date, trader ID, district 1, district 2, car's name/door/displacement/grade, model year, color, handle, equipment/mission, desired purchase sum, method of payment, purchase vehicle, visiting assessment, address, and appellation (name of purchase trader) are stored in order of registration date. Registration of the vehicle data to the purchase vehicle database 44 is performed from the PC 33 of the parts recycling trader contained in the network 3.

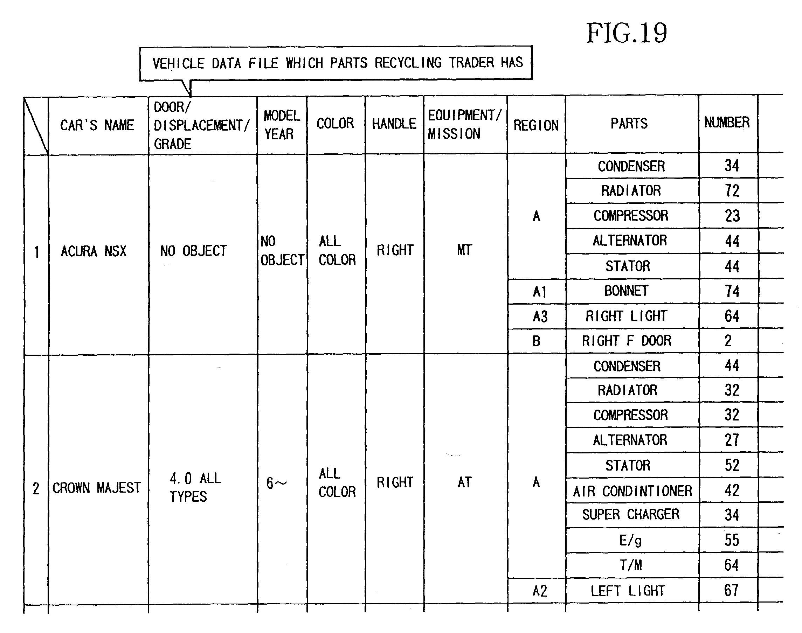

In the PC 32, on the input screen of the display device 56, the parts recycling trader edits the respective items (pur chase desired district 1, purchase desired district 2, car's name, door/displacement/grade, model year, color, handle, equipment/mission, desired purchase sum, method of payment, purchase car, visiting assessment, address, appellation, and telephone number) with key input of car's name ┌Acura NSX┘ , and transmits and registers them into the information center 4 through the communication line of the network 3. In the editing process of the vehicle data, a vehicle data file (see Fig. 19) stored in the external storage device 53 of the PC 32 is used.

The information center 4 searches purchase information coincident with the condition of the sale vehicle data from ┌Nishinihon Jidosha Hanbai Co., Ltd.┘ stored in the sale vehicle database 43 from the purchase vehicle database 44. In the information center 4, as a result of the search, data of ┌Hightop Co., Ltd.┘ of the parts recycling trader registered on ┌February 12┘ are obtained as the purchase information coincident with the condition from the purchase vehicle database 44.

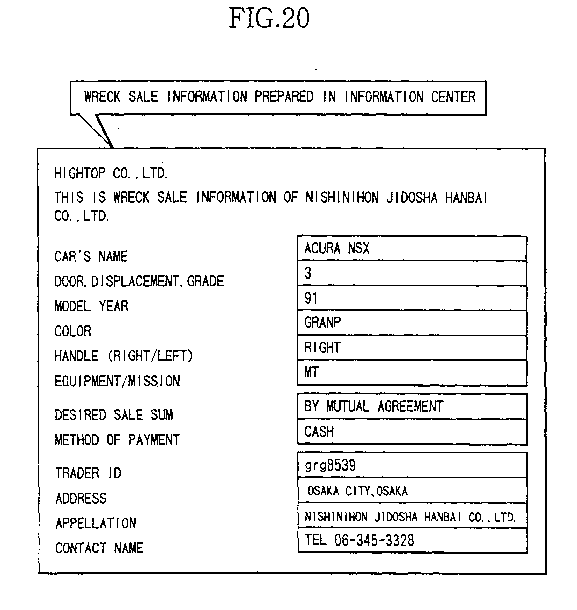

In the information center 4, on the screen of the display device 56, the wreck sale information in the form shown in Fig. 20 is edited, and is transmitted from the internet connection screen through the communication line of the network 3 to the PC 32 used by the parts recycling trader ┌Hightop Co., Ltd.┘ . The parts recycling trader can receive the wreck sale information transmitted from the information center 4 in the form of electronic mail by the PC 32.

Incidentally, in the above embodiment, although the structure in which the respective terminal devices are contained in the two networks is shown, the present invention may be carried out by a system further including a network of a car sales company, or a system in which the respective terminal devices are contained in the same network. Besides, the present invention can be applied to, as the objective used car, not only an automobile such as a regular car or truck, but also a motor-bicycle or motorized bicycle.

Although only a few embodiments of the present invention have been described in detail above, those skilled in the art will readily appreciate that many modifications are possible in the preferred embodiments without departing from the novel teachings and advantages of the present invention. Accordingly, all such modifications are intended to be included within the scope of the present invention as defined by the following claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A used car distribution promoting system, comprising:
a first terminal device corresponding to a first trader, for transmitting various data concerning a car obtained at least one of chances of repair and maintenance/inspection of the car of a customer through a communication line in order to register the data as sale vehicle data;
a second terminal device corresponding to a second trader of used car purchase, for transmitting various data concerning wishes for purchase of a used car through a communication line in order to register the data as purchase vehicle data; and
a third terminal device corresponding to an information center, for registering the sale vehicle data transmitted from the first terminal device and the purchase vehicle data transmitted from the second terminal device, respectively;
wherein vehicle data coincident with a condition in the information center are provided as used car purchase information to the customer.

2. A used car distribution promoting system, comprising:
a first terminal device corresponding to a first trader, for transmitting various data concerning a car of a customer obtained one of chances of refueling and purchase of articles through a communication line in order to register the data as sale vehicle data;
a second terminal device corresponding to a second trader of used car purchase, for transmitting various data concerning wishes for purchase of a used car through a communication line in order to register the data as purchase vehicle data; and
a third terminal device corresponding to an information center, for registering the sale vehicle data transmitted from the first terminal device and the purchase vehicle data transmitted from the second terminal device, respectively;
wherein vehicle data coincident with a condition in the information center are provided as used car purchase information to the customer.

3. A used car distribution promoting system, comprising:
a first terminal device corresponding to a first trader, for transmitting various data concerning a wreck through a communication line in order to register the data as sale vehicle data;
a second terminal device corresponding to a second trader of parts recycling, for transmitting various data concerning wishes for purchase of a car for parts recycling through a communication line in order to register the data as purchase vehicle data; and
a third terminal device corresponding to an information center, for registering the sale vehicle data transmitted from the first terminal device and the purchase vehicle data transmitted from the second terminal device, respectively;
wherein vehicle data coincident with a condition in the information center are provided as sale information to the second trader of parts recycling.

4. A used car distribution promoting system according to claim 1 or 2, wherein the used car purchase information is provided through a communication line to a fourth terminal device corresponding to the customer.

5. A used car distribution promoting system according to claim 3, wherein the sale information is provided through a communication line to the second terminal device corresponding to the second trader of parts recycling.

6. A used car distribution promoting method, comprising the steps of:
registering, as sale vehicle data, various data concerning cars received through a communication line from a first terminal device corresponding to a first trader;
registering, as purchase vehicle data, various data concerning purchase wishes received through a communication line from a second terminal device corresponding to a second trader; and
providing, as buying and selling information, vehicle data in which conditions are coincident with each other between the sale vehicle data and the purchase vehicle data from a third terminal device corresponding to an information center to a requester.
